(19) **Europäisches Patentamt**

**European Patent Office**

**Office européen des brevets**

(11) **EP 1 577 888 A2**

(12) **EUROPEAN PATENT APPLICATION**
published in accordance with Art. 158(3) EPC

(43) Date of publication:
**21.09.2005 Bulletin 2005/38**

(51) Int Cl.⁷: **G11B 7/24**

(21) Application number: **03746893.1**

(86) International application number:
**PCT/JP2003/004734**

(22) Date of filing: **14.04.2003**

(87) International publication number:
**WO 2003/090218 (30.10.2003 Gazette 2003/44)**

(84) Designated Contracting States:
**AT BE BG CH CY CZ DE DK EE ES FI FR GB GR HU IE IT LI LU MC NL PT RO SE SI SK TR**

(30) Priority: **19.04.2002 JP 2002117508**

(71) Applicant: **TDK Corporation Tokyo 103-8272 (JP)**

(72) Inventors:
• **INOUE, Hiroyasu Tokyo 103-8272 (JP)**
• **HIRATA, Hideki Tokyo 103-8272 (JP)**

(74) Representative: **HOFFMANN EITLE Patent- und Rechtsanwälte Arabellastrasse 4 81925 München (DE)**

(54) **OPTICAL RECORDING MEDIUM**

(57) The optical recording medium according to the present invention includes a recording layer (4), a second absorbing layer (A2) and a heat sink layer (6) formed in order from an incident side for laser light (L), the second absorbing layer (A2) having an attenuation coefficient k for a wavelength of the laser light (L) that satisfies $0.06 \leq k \leq 1.0$. In this case, a first absorbing layer (A1) is preferably formed on an incident side-surface of the recording layer (4) for the laser light (L), the first absorbing layer (A1) having an attenuation coefficient k for the wavelength of the laser light (L) that satisfies $0.06 \leq k \leq 1.0$. By doing so, even when recording at high density, it is possible to sufficiently improve the reproduction durability and to sufficiently reduce the cross-erasing.

**Description**

TECHNICAL FIELD

The present invention relates to an optical recording medium constructed so that the recording or reproduction of information can be carried out by irradiation with recording light or reproduction light.

RELATED ART

Optical recording media that are capable of high-density recording and on which recorded information can be deleted and overwritten (hereinafter referred to as "rewritable optical recording media") have been subject to much attention in recent years. Information is recorded on phase-change optical recording media, which are one example of such rewritable optical recording media, by changing the crystal state of a recording layer through irradiation with laser light. Recorded information is reproduced by detecting changes in the reflectivity of the recording layer due to such changes in the crystal state. Phase-change optical recording media have been subject to particular attention since it is possible to record and reproduce information using an optical system with a simpler construction than an optical system used with magneto-optical recording media. In this case, in a phase-change optical recording medium, chalcogenide compounds, such as Ge-Sb-Te materials, are normally used as the optical material of the recording layer for reasons such as the large difference in the reflectivity between the crystal state and the amorphous state and also the relatively high stability of suchmaterials in the amorphous state.

When information is recorded on a phase-change optical recording medium, the recording layer is irradiated by laser light (a recording laser beam) set at a high power (the "recording power") capable of raising the temperature of the recording layer to the melting point or above. By doing so, amorphous recording marks are formed at the positions that were irradiated by the laser light of the recording power through rapid cooling after the recording layer has melted. Also, when erasing recording marks, the marks are irradiated by laser light of relatively low power (the "erasing power") that is capable of raising the temperature of the recording layer to the crystallization temperature or above but below the melting point. In this case, the parts that were irradiated by the laser light of the erasing power are slowly cooled after the recording layer has been heated to the crystallization temperature or above, so that the recording marks (amorphous parts) are restored to the crystal state (i.e., the recording marks are erased) . In this way, by varying the power (irradiating power) of a single laser beam, it is possible to overwrite the recording data on a rewritable phase-change optical recording medium.

On the other hand, to realize a high recording density, there is a tendency in recent years for optical recording media to have a reduced track pitch. Also, with regard to the laser light used to irradiate optical recording media during recording and reproduction, progress has been made in reducing the wavelength of the light and increasing the numerical aperture of an objective lens of a recording/reproduction optical system that emits the laser light to make it possible to record and reproduce smaller recording marks. Accordingly, it has become possible to increase the amount of information that can be recorded on a single optical recording medium (i.e., high density recording has been realized). In this case, the spot diameter of the recording laser beam emitted onto the surface of the recording layer is expressed as $\lambda$/NA where $\lambda$ is the wavelength of the laser light and NA is the numerical aperture of the objective lens, and as this value $\lambda$/NA becomes smaller, it becomes possible to record and reproduce smaller recording marks and also possible to carry out recording and reproduction of an optical recording medium with a narrower track pitch.

DISCLOSURE OF THE INVENTION

By investigating the conventional optical recording media described above, the present inventors discovered the following problems. That is, with a conventional optical recording medium, to make the overwriting of recorded data possible, the recording layer is constructed so that amorphous parts (recording marks) can be restored to the crystalline state (i.e., the recording marks can be erased) by irradiation with laser light of the erasing power. For this reason, to prevent recording marks from being erased by a reproduction laser beam emitted during the reproduction of recorded information on this kind of optical recording medium, a low power laser light that does not affect the crystalline state of the recording marks is normally used. However, even if low power laser light, for example, is used as the reproduction light (the reproduction laser beam), when the reproduction of the recorded information has been carried out several times, for some reason recrystallization (returning to the crystalline state) occurs at parts where the recording marks are formed. Due to such recrystallization, there is the problem of an increase in jitter, that is, there is a large decrease in reproduction durability. Here, regarding the causes of such recrystallization, the inventors found that when an optical recording medium is irradiated with short wavelength laser light using an optical system with an objective lens with a large numerical aperture, that is, when the ($\lambda$/NA) value described above is small, recrystallization occurs due to the energy density increasing inside the laser beam spot. Accordingly, although it may be thought that jitter can be reduced using laser light with a large ($\lambda$/NA) value, in such case there is the problem of it being difficult to raise the recording density.

Also with a conventional optical recording medium, recrystallization or so-called "cross-erasing" occurs for recording marks (amorphous parts) formed in tracks that are adjacent to the trackbeing recorded (hereinafter such tracks are referred to as "adjacent tracks"), and there is the problem of the C/N ratio falling due to the occurrence of such cross-erasing. More specifically, during the recording of information, when an optical recording medium is irradiated with laser light of the recording power, the temperature will rise in the adjacent tracks as well as the track being recorded through the irradiation of the laser light. At this time, recording marks formed in the adjacent tracks are recrystallized. Here, it is known that cross-erasing becomes more likely when the track pitch of the tracks being recorded is narrow relative to the spot diameter of the laser beam. Accordingly, although it is thought that the occurrence of cross-erasing can be avoided by reducing the spot diameter of the laser beam, the inventors found that even if the relationship between the track pitch of the tracks being recorded and the beam spot diameter is the same, the higher the energy density inside the beam spot, for example, the shorter the wavelength of the laser beam emitted by the recording/reproduction optical system, the more likely cross-erasing is to occur. For this reason, it is thought that it will normally be difficult to avoid the occurrence of cross-erasing by changing the spot diameter of the laser beam.

The present invention was conceived in order to solve the problems described above, and it is a principal object of the present invention to provide an optical recording medium that can be recorded at high density and can also improve the reproduction durability and reduce cross-erasing.

An optical recording medium according to the present invention includes a recording layer, a first absorbing layer and a heat sink layer formed in order from an incident side for light used for recording or light used for reproduction, the first absorbing layer having an extinction coefficient k for a wavelength of the light used for recording or the light used for reproduction that satisfies $0.06 \leqq k \leqq 1.0$.

With this optical recording medium, by constructing the first absorbing layer so that the extinction coefficient k for the wavelength of the light used for recording or for reproduction satisfies $0.06 \leqq k \leqq 1.0$, it is possible to sufficiently improve the reproduction durability and to sufficiently reduce cross-erasing, even when recording at high density.

Here, the optical recording medium should preferably include a second absorbing layer formed on an incident side-surface of the recording layer for the light, the second absorbing layer having an extinction coefficient k for the wavelength of the light used for recording or for reproduction that satisfies $0.06 \leqq k \leqq 1.0$. With this construction, it is possible to further improve the reproduction durability and to also considerably reduce the cross-erasing. In this case, jitter can be reduced by an increasing amount as the shortest mark length used when recording (i.e., when recording information at high density) decreases.

It is also preferable for the optical recording medium to be constructed so as to be capable of being recorded or reproduced when a relationship between the wavelength $\lambda$ of the light used for recording or for reproduction and a numerical aperture NA of an irradiation optical system for the light used for recording or for reproduction satisfies a condition $\lambda/NA \leqq 680nm$. With this construction, information can be recorded with a sufficiently high density compared to an optical recording medium constructed so as to be capable of being recorded or reproduced at conditions that satisfy $\lambda/NA > 680nm$.

Also, a recording track pitch should preferably be formed at $0.35\mu m$ or below. With this construction, information can be recorded with a considerably higher density.

In addition, the optical recording medium should preferablybe constructed so that information canbe recorded with a shortest mark length set at $0.17\mu m$ or below. With this construction, information can be recorded at even higher density.

It should be noted that the disclosure of the present invention relates to a content of Japanese PatentApplication 2002-117508 that was filed on 19 April 2002 and the entire content of which is herein incorporated by reference.

BRIEF DESCRIPTION OF THE DRAWINGS

FIG. 1 is a cross-sectional view schematically showing the multilayer structure of an optical recording medium according to a first aspect of the present invention.

FIG. 2 is a cross-sectional view schematically showing the multilayer structure of an optical recording medium according to a second aspect of the present invention.

FIG. 3 is a cross-sectional view of an optical recording medium 1 fabricated using the multilayerstructure according to the second aspect of the present invention.

FIG. 4 is a cross-sectional view of an optical recording medium 1A fabricated using the multilayer structure according to the second aspect of the present invention.

FIG. 5 is a cross-sectional view of a state where a first dielectric layer 3 (a first absorbing layer A1) is formed on the recording layer 4.

FIG. 6 is a table showing the construction of respective optical recording media fabricated as the first embodiment and evaluation results for cross-erasing and reproduction durability.

FIG. 7 is a table showing the construction of respective optical recording media fabricated as the second embodiment and evaluation results for cross-erasing and reproduction durability.

FIG. 8 is a table showing the construction of respective optical recording media fabricated as the third embodiment and evaluation results for jitter.

FIG. 9 is a graph showing the relationship between the shortest mark lengths Ms and the occurrence of jitter for specific embodiments 10 and 11 and comparative examples 6 and 7 for the third embodiment.

FIG. 10 is a table showing the construction of respective optical recording media fabricated as the fourth embodiment and evaluation results for C/N ratios of the reproduction signals.

FIG. 11 is a table showing the construction of respective optical recording media fabricated as the fifth embodiment and evaluation results for C/N ratios of the reproduction signals.

FIG. 12 is a table showing the construction of respective optical recording media fabricated as the sixth embodiment and evaluation results for cross-erasing and reproduction durability.

BEST MODE FOR CARRYING OUT THE INVENTION

Preferred embodiments of an optical recording medium according to the present invention will now be described with reference to the attached drawings.

First, characteristic parts of the present invention will be described with reference to the drawings.

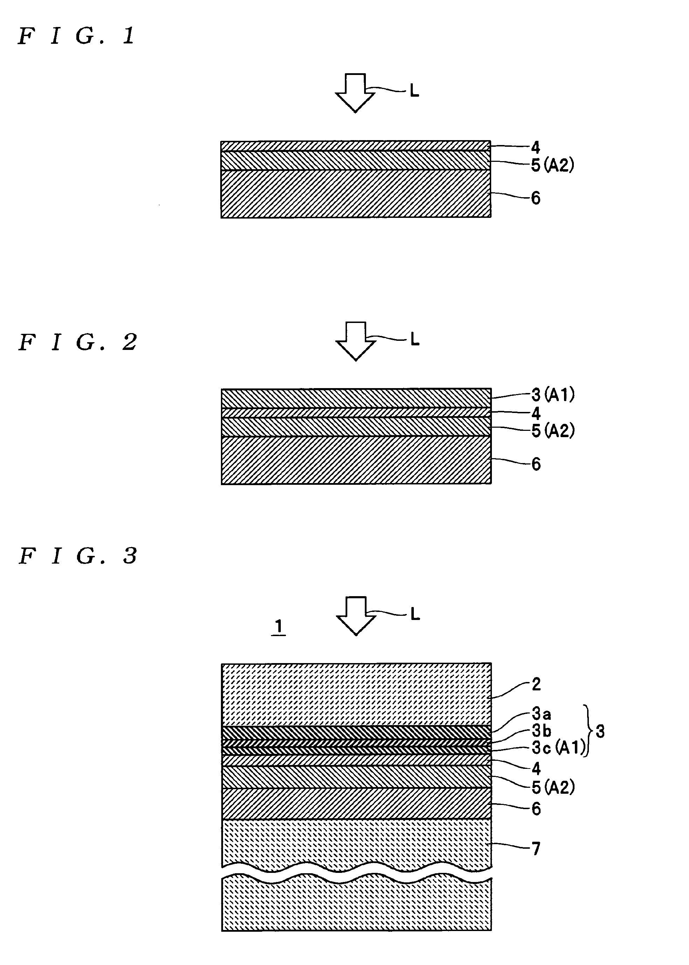

In a first aspect of the optical recording medium according to the present invention, as shown in FIG. 1, when looking from an incident side for laser light L (referred to as "recording light or reproduction light" for the present invention), a recording layer 4, a second dielectric layer 5, and a heat sink layer 6 are formed in that order. Also, in a second aspect of the optical recording medium according to the present invention, as shown in FIG. 2, when looking from an incident side for laser light L, a first dielectric layer 3, a recording layer 4, a second dielectric layer 5, and a heat sink layer 6 are formed in that order. In this case, the second dielectric layer 5 corresponds to a "first absorbing layer" for the present invention and the first dielectric layer 3 corresponds to a "second absorbing layer" for the present invention. Here, to make the order in which the layers are formed more understandable, the first dielectric layer 3 is referred to as the first absorbing layer A1 and the second dielectric layer 5 as the second absorbing layer A2. The first absorbing layer A1 and the second absorbing layer A2 (hereinafter referred to as the "absorbing layers A" when no distinction is required) are formed so that when the complex refractive index is expressed as (n+ik (where n is a refractive index)), an extinction coefficient k for the wavelength of the laser light L is in a range of 0.06 to 1.0, inclusive. As described later, when the absorbing layers A are formed so that the extinction coefficient k is zero, the effect of the present invention is not realized, while when the absorbing layers A are formed so that the extinction coefficient k is a large value that exceeds 1.0, the absorptance for the laser light L in the absorbing layers A is too high, which obstructs the recording and reproduction of recording information.

In this case, the extinction coefficient k of the absorbing layers A can be calculated based on the reflectivity and transmissivity for the absorbing layers A. More specifically, as one example, the extinction coefficient k can be calculated according to the procedure shown below. First, the measurement sample A-1 is fabricated by forming an absorbing layer A with a thickness of 20nm on a glass slide. Next, a measurement sample A-2 is fabricated by forming an absorbing layer A with a thickness of 20nm and a reflective layer with a thickness of 100nm in that order on a glass slide. It should be noted that an optical material whose complex refractive index (n+ik) is known is used as the reflective layer of the measurement sample A-2. Next, the reflectivity and transmissivity for the wavelength of the laser light L are measured for the measurement samples A-1 and A-2, respectively. The measurement of the reflectivity and transmissivity is carried out using a 45° absolute reflectivity measurement accessory (RTA-2000 type) for a spectrophotometer (MPS-2000) made by Shimadzu Corporation, for example. Next, based on the reflectivity and transmissivity measured using the measurement samples A-1 and A-2, the complex refractive index is found by the matrix method. The extinction coefficient k is specified using this complex refractive index. It should be noted that the complex refractive index is not limited to being calculated by the method described above, and can be found using an ellipsometer or the like.

In an optical recording medium according to the first aspect, the laser light L passes through the recording layer 4 and the second dielectric layer 5 (the second absorbing layer A2) and is reflected by the heat sink layer 6, before passing back through the second dielectric layer 5 and reaching the recording layer 4. In this case, the second dielectric layer 5 absorbs part of the laser light L and generates heat, so that compared to a conventional optical recording medium that does not have a second dielectric layer 5, the generation of heat by the recording layer 4 is suppressed. In this case, the second dielectric layer 5 is present between the heat sink layer 6, which favorably dissipates heat, and the recording layer 4, so that the heat generated in the second dielectric layer 5 is conducted to the heat sink layer 6 and is quickly dissipated. This means that the generation of heat by the second dielectric layer 5 hardly affects the recording layer 4. Accordingly, jitter is reduced and the reproduction durability is improved for an optical recording medium according to the first aspect. Also, with an optical recording medium according to the first aspect, since the heat generated in the second dielectric layer 5 is conducted to the heat sink layer 6 and is quickly dissipated, the region in which the temperature rises to a comparatively high temperature due to irradiation with the laser light L is limited to the beam spot and only the narrow immediate periphery. Accordingly, for the optical recording medium of the first aspect, the occurrence of cross-erasing can be avoided.

For the optical recording medium according to the first aspect, the effect described above can be sufficiently obtained when the relationship between the wavelength λ of the laser light L (recording/reproduction light) and the numerical aperture NA of the irradiation optical system of the laser light L is λ/NA≦680nm and preferably λ/NA≦630nm.

In this case, λ/NA correlates to the beam spot diameter of the laser light L so that the beam spot diameter becomes smaller as λ/NA falls, so that as a result, the energy density inside the beam spot rises. Also, as described above, normally if the energy density inside the beam spot rises, the reproduction durability falls and cross-erasing becomes likely. On the other hand, for the optical recording medium of the first aspect, even in the case where λ/NA is a relatively small value as described above, it is possible to improve the reproduction durability and to also reduce cross-erasing. In this case, in reality there are limits on the laser wavelength and the numerical aperture that can be used, with it being difficult to set an extremely low wavelength and an extremely high numerical aperture. For this reason 250nm≦λ/NA, and preferably 350nm≦λ/NA is set.

Also, cross-erasing is more likely to occur the narrower the recording track pitch. For this reason, the multilayer structure of the optical recording medium according to the present invention is effective when λ/NA is in the above range and the recording track pitch Pt is such that Pt≦0.35μm, and in particular Pt≦0.33μm. It should be noted that although there is no particular limitation on the lower limit of the recording track pitch Pt, as described above, since there are limits on the laser wavelength and the numerical aperture that can be used, it is difficult in reality to make the beam spot diameter that correlates to λ/NA extremely small. Accordingly, although 0.14μm≦Pt is normally set, it is preferable to set 0.15μm ≦Pt.

On the other hand, with the optical recording medium according to the second aspect, in addition to the optical recording medium according to the first aspect, the first dielectric layer 3 (the first absorbing layer A1) is formed on a nearside surface of the recording layer 4 when looking from the incident side for the laser light L, so that while the reproduction durability is improved with the second dielectric layer 5, a further reduction in jitter is achieved by the first dielectric layer 3. In this case, for the optical recording medium according to the second aspect when the shortest mark length Ms for recording marks is set at Ms≦0.17μm, a sufficient reduction in jitter can be achieved compared to other optical recording media. Also, a larger reduction in jitter can be achieved compared to other optical recording media when Ms≦0.165μm, in particular when Ms ≦0.16μm, and especially when Ms≦0.155μm. In this way, since it is possible to reduce jitter when the shortest mark length Ms has been reduced, the optical recording medium according to the second aspect is especially effective as an optical recording medium for high-density recording. It should be noted that there is no clear reason why jitter is reduced when the shortest mark length Ms is the value given above.

When fabricating the optical recording media according to the first and second aspects described above, the absorbing layers A should preferably be formed by sputtering. It should be noted that the absorbing layers A may be composed of a plurality of layers of different compositions. The thickness of the absorbing layers A can be decided as appropriate to facilitate optical design and thermal design for the entire optical recording medium in a range within which the reproduction durability can be improved and the jitter can be reduced. As one example, the thickness of the absorbing layers A may be set at 5nm to 50nm, inclusive, or more preferably at 5nm to 40nm, inclusive. Here, if the absorbing layers A are too thin, it is difficult to improve the reproduction durability and to reduce jitter. On the other hand, if the absorbing layers A are too thick, there is a fall in the amount of light reflected from the optical recording medium during irradiation with the laser light L, so that it is difficult to obtain a sufficient reproduction output, which makes the reproduction of recorded information problematic. Also, there are no particular limitations on the optical material used in the absorbing layers A, and such material can be decided as appropriate to facilitate optical design and thermal design for the entire optical recording medium. As one example, it is preferable to use cerium oxide or zinc oxide, and a dielectric that includes at least one of these substances may be used.

In this case, as described for specific embodiments given later, although the effect of the present invention can be realized by providing absorbing layers A made of ZnO (whose extinction coefficient k=0.1), the effect of the invention is not realized when a ZnO target is used and reactive sputtering is conducted in an atmosphere including oxygen gas to form the absorbing layers A (whose extinction coefficient k=0) . That is, even if the composite elements of the absorbing layers A are the same, by varying the ratio of the composite elements, a small variation is caused in the extinction coefficient k from 0.1 to 0, which prevents the effect of the invention from being realized.

Accordingly, to stably realize the effect of the invention, it is necessary to strictly control the formation of the absorbing layers A so that the intended value is achieved for the extinction coefficient k. More specifically, when the absorbing layers A are formed by sputtering, for example, the extinction coefficient k is controlled via the target composition, the flow of the reactive gas during reactive sputtering, and the like.

To sufficiently achieve the effect of the invention, it is also preferable to form the absorbing layers A so as to tightly adhere to the recording layer 4. However, it is possible to provide other layers (such as dielectric layers aside from the first dielectric layer 3 and the second dielectric layer 5) between the recording layer 4 and the absorbing layers A. However, when the layers formed between the recording layer 4 and the absorbing layers A are too thick, there is the risk of the effect of the invention being lost, so that the thickness of such layers is set at 30nm or below, and preferably at 20nm or below. In addition, although the present invention is especially effective for phase-change optical recordingmedia, the invention can also be applied to optical recording media (such as magneto-optical recording media) that use heat mode recording. With such magneto-optical recording media, normally when λ/NA is small, magnetic inversion due to repeated reproduction can easily occur, as can cross-erasing. However, by using the multilayer structure according to the present invention, such problems can be effectively avoided.

Japanese Laid-Open Patent Publication No. S63-217542 discloses an optical information recording member where transparent heat-resistant protective layers are formed so as to sandwich the recording layer and second heat-resistant protective layers that exhibit absorption at the wavelength of the laser light L used for recording and erasing are also formed between the recording layer and the heat-resistant protective layers. The second heat-resistant protective layers disclosed in this publication are similar to the absorbing layers A for the present invention in exhibiting absorption at the wavelength of the laser light L. However, as described below, the present invention is very different to the invention of this publication.

In the "Effects" section of the publication, it is stated that by using protective layers that absorb light, the thickness of the light absorbing layers (the recording layer and the protective layers) is larger than in conventional media, resulting in an increase in heat capacity, so that it is possible to make a temperature distribution in the track width direction within the recording track grooves uniform. That is, in the invention disclosed by the publication, as shown by the curve 10 in FIG. 2 of the publication, the region in which the temperature rises due to irradiation with the recording light extends in the width direction for recording tracks and the peak temperature in the center of the recording tracks falls. Accordingly, from the disclosure of the publication, when protective layers that absorb light are provided, no reduction in cross-erasing will occur, and conversely an increase in cross-erasing is expected. However, when the present inventors conducted experiments for the disclosure of the publication, the unexpected effect of a reduction in cross-erasing was observed.

Here, the invention disclosed by the publication differs from the first aspect of the present invention in that no heat sink layer that favorably dissipates heat is provided. Accordingly, in the invention of the publication, since no heat sink layer is provided, the generated heat will accumulate in the protective layers that absorb light, so that as a result, it is thought that the region of the recording layer with raised temperature will extend in the width direction of the recording track to cause cross-erasing. However, for the invention of the publication, recording is carried out using laser light with a wavelength of 830nm and compared to the first aspect of the present invention, the beam spot diameter is large, so that the energy density inside the beam spot is comparatively low. For this reason, with the invention of the publication, it is thought that there will be no particular problems relating to cross-erasing and reproduction durability. Accordingly, if short recording marks were recorded with a short-wavelength laser under the same conditions as the second aspect, it is thought that major problems would occur relating to cross-erasing and reproduction durability.

In addition, for the invention of the publication, laser light L of a remarkably long wavelength of 830nm is used. For this reason, although no mention is made of a shortest mark length in the publication, the shortest mark length of the publication is expected to be far longer than the shortest mark length recorded on the optical recording medium according to the second aspect of the present invention. Accordingly, for the invention of the publication, it would be difficult to reduce jitter in the same conditions as the second aspect of the present invention where short recording marks are recorded using a laser with a short wavelength.

The following describes, with reference to the drawings, an optical recording medium fabricated based on the second aspect of the present invention described above.

As shown in FIG. 3, an optical recording medium 1 has the heat sink layer 6 that is made of a metal or a metalloid, the second dielectric layer 5 (the second absorbing layer A2), the recording layer 4 that is a phase change layer, the first dielectric layer 3, and the translucent substrate 2 formed in that order in layers on a support substrate 7. For this optical recording medium 1, the laser light L (recording/reproduction light) is incident from the surface on which the translucent substrate 2 is formed. It should be noted that between the support substrate 7 and the heat sink layer 6, an intermediate layer composed of a dielectric material may be provided. The support substrate 7 keeps the optical recording medium 1 rigid, and has grooves and lands (not shown) formed in a surface thereof. The thickness of the support substrate 7 is normally 0.2 to 1.2mm and preferably 0.4 to 1.2mm, and the support substrate 7 may be transparent or opaque. In this case, the support substrate 7 may be formed using a resin such as polycarbonate in the same way as a normal optical recording medium, or may be formed of glass.

The heat sink layer 6 is a layer for taking the heat generated by the second dielectric layer 5 and quickly conducting the heat to the support substrate 7, and is formed on the surface of the support substrate 7 by sputtering or a vapor phase epitaxymethod such as vapor deposition. There are no particular limitations on the material used to form the heat sink layer 6, and as examples, a metal or metalloid such as Al, Au, Ag, Pt, Cu, Ni, Cr, Ti, and Si, or an alloy including one or more of such elements may be used. However, when Ag or Al alone is used, sufficient corrosion resistance is not achieved, so that an element that improves the corrosion resistance should preferably be added. Also, in the optical recording medium 1, due to crystal growth during the formation of the heat sink layer 6, the surface roughness on the incident-side for the laser light L is likely to increase, which can cause increases in reproduction noise. Accordingly, when the heat sink layer 6 is formed, it is preferable to make the crystal grain diameter small, so that instead of using Ag or Al alone, an element for reducing the crystal grain diameter of the heat sink layer 6 or for making the heat sink layer 6 an amorphous layer should preferably be added.

However, if other elements are added when forming the heat sink layer 6, the conductance of heat by the heat sink layer 6 falls. Accordingly, to reduce the cross-erasing and improve the reproduction durability, it is preferable to form the heat sink layer 6 with Ag, which has high heat conductivity, as a main constituent so that the recording layer 4 and the second dielectric layer 5 can be quickly cooled during irradiation with the laser light L. In this case, Mg, Pd, Ce, Cu, Ge, La, S, Sb, Si, Te, and Zr can be given as examples of additional component elements added to the Ag. It is preferable for at least one and more preferably two or more of such additional component elements to be used. It should be noted that the included amounts of the additional component elements in the heat sink layer 6 are set so that the added amount of any single element is 0.05 to 2.0% by atoms and preferably 0.2 to 1. 0% by atoms and the total additional component amount is 0.2 to 5.0% by atoms and preferably 0.5 to 3.0% by atoms. In this case, if the included amount of the additional component elements is too small, the effect (such as a reduction in surface roughness) of the inclusion of such additional component elements is insufficient. On the other hand, if the amount of the included additional component elements is too large, the heat conductivity falls.

Also, the heat conductivity of the heat sink layer 6 composed of a metal or metalloid tends to decrease as the crystal grain diameter falls. For this reason, if the heat sink layer 6 is amorphous, it is difficult to obtain a sufficient cooling speed during recording, so that it is preferable to initially form the heat sink layer 6 as an amorphous layer and to then crystallize the heat sink layer 6 by performing a heat treatment. In this case, by crystallizing the heat sink layer 6 by performing a heat treatment after initially forming an amorphous layer, the surface roughness (smoothness) of the amorphous state can be maintained, and the heat conductivity can also be improved by the crystallization. Although it is difficult to obtain a sufficient reflectivity when the thickness of the heat sink layer 6 is insufficient, the reflectivity does not become especially high when the heat sink layer 6 is excessively thick and the cost also increases by the amount of material consumed. For this reason, the thickness should preferably be set at 10nm to 300nm, inclusive.

It should be noted that although an example where the heat sink layer 6 is formed of a metal or a metalloid is described in the embodiments of the invention, the heat sink layer 6 may be formed of other materials. For example, in a so-called "multilayer optical recording medium" that has a plurality of recording layers 4, 4, the laser light L is incident via the recording layer 4 on the surface side, and when a heat sink layer 6 made of metal is provided on this surface-side recording layer 4, the present of the heat sink layer 6 causes a remarkable fall in the transmissivity for the laser light L. Accordingly, with a multilayer optical recording medium, to reduce the cross-talk between the recording layers 4, 4, a relatively thick resin layer is often provided between the recording layers 4, 4. In this case, a resin layer with a certain degree of thickness has a relatively high thermal capacity, so that when the present invention is applied to a multilayer optical recording medium, the above resin layer is used as the heat sink layer for the present invention.

The first dielectric layer 3 and the second dielectric layer 5 are formed by sputtering or the like to sandwich the recording layer 4, so that oxidization and deterioration of the recording layer 4 are prevented and heat conducted from the recording layer 4 during irradiation with the laser light L is cut off and conducted away in the planar direction, thereby protecting the support substrate 7 and the translucent substrate 2. Also, by providing the first dielectric layer 3 and the second dielectric layer 5, it is possible to improve the modulation degree of the laser light L. In this case, the second dielectric layer 5 corresponds to the first absorbing layer for the present invention, and as described later is formed as a thin film of an optical material. It should be noted that in the present embodiment of the invention, the second dielectric layer 5 is formed so that the entire layer in the thickness direction functions as the second absorbing layer A2, but this is not a limitation for the present invention and, like the first dielectric layer 3, the second dielectric layer 5 may have a multilayer structure of a plurality of unitary dielectric layers, with at least one layer out of the unitary dielectric layers being set as the second absorbing layer A2. In this case, it is preferable for the unitarydielectric layers aside from the second absorbing layer A2 to have a heat conductivity that is equal to or higher than the heat conductivity of the second absorbing layer A2.

The first dielectric layer 3 is composed of a plurality of unitary dielectric layers 3a to 3c with different compositions that are formed on top of one another. In this case, the unitary dielectric layer 3c (the first absorbing layer A1) formed on the recording layer 4 functions as the second absorbing layer for the present invention. It should be noted that although an example where the first dielectric layer 3 composed of the multilayer structure of the plurality of unitary dielectric layers 3a to 3c is formed on the recording layer 4 is described in the present embodiment of the present invention, like the second dielectric layer 5 described above, the first dielectric layer 3 can also be formed of a single film whose entire thickness can be used as the first absorbing layer A1. In this construction, if the first dielectric layer 3 used as the first absorbing layer A1 is too thick, the amount of reflected light for the laser light L is reduced and it becomes difficult to obtain a sufficient reproduction output, so that the first dielectric layer 3 shouldpreferablybe formed with an overall thickness of 50nm or below. Accordingly, as shown in FIG. 3, it is normally preferable for the first dielectric layer 3 to be formed of a multilayer structure such as the plurality of unitary dielectric layers 3a to 3c, with one unitary dielectric layer out of the layers 3a to 3c being set as the first absorbing layer A1.

The dielectrics (optical materials) used as the second dielectric layer 5 and the unitary dielectric layers 3a to 3c (the first dielectric layer 3) are preferably compounds including at least one kind of metal component selected from Si, Ge, Zn, Al, and rare earth elements, for example. Such compounds should preferably be oxides, nitrides, or sulfides, and it is alsopossible to use amixture including two or more of such compounds. In addition, the respective thicknesses of the first dielectric layer 3 and the second dielectric layer 5 may be determined as appropriate so that the protective effect and modulation degree improving effect are sufficiently obtained, with the thickness of the first dielectric layer 3 normally being set in a range of 30nm to 300nm, inclusive, and preferably 50nm to 250nm, inclusive, and the thickness of the second dielectric layer 5 being set in a range of 5nm to 50nm, inclusive. However, to produce a rapid cooling structure, the thickness of the second dielectric layer 5 is set at 30nm or below, and preferably at 25nm or below.

The recording layer 4 is formed by sputtering a phase change material and various recording information is recorded by forming recording marks by irradiation with laser light L of the recording power. There are no particular limitations on the composition of the recording layer 4, but it is preferable for at least Sb and Te to be included. In this case, the recording layer 4 composed of only Sb and Te has an extremely low crystallization temperature of around 130°C and the storage reliability of the recorded information is insufficient, so that other elements should preferably be added to improve the crystallization temperature. Here, Mn, In, Ag, Au, Bi, Se, Al, P, Ge, H, Si, C, V, W, Ta, Zn, Ti, Sn, Pb, Pd, and rare earth elements (Sc, Y and lanthanides) can be given as examples of such added elements. Out of these, it is preferable to select at least one out of rare earth elements, Ag, In, and Ge since the storage reliability improving effect is especially high.

More specifically, as the composition that includes Sb and Te, the elements aside from Sb and Te are expressed as "M", and it is preferable for the conditions given below to be satisfied when the atomic ratio of the elements composing the recording layer is expressed as Equation (1) below.

$$(Sb_xTe_{1-x})_{1-y}M_y \qquad \text{Equation (1)}$$

where preferably $0.2 \leqq x \leqq 0.9$ and $0 \leqq y \leqq 0.4$. More preferably, x and y should be set so that $0.5 \leqq x \leqq 0.85$ and $0.01 \leqq y \leqq 0.2$.

In Equation (1) above, when the value x that represents the included amount of Sb is too small, the crystallization speed is reduced, so that it is difficult to erase recordingmarks at relatively high linear velocities and the reflectivity of crystallized regions of the recording layer 4 also falls, thereby reducing the reproduction signal output. Also, when x is too small, the recording of information (i.e., the formation of recording marks) becomes difficult, while when x is too large, the difference in reflectivity between the crystallized state and the amorphous state is reduced, which reduces the reproduction signal output. On the other hand, although there are no limitations for the element M, at least one of the above elements that exhibit the storage reliability improving effect should preferably be selected. When the value y that represents the included amount of the element M is too large, the reproduction output is likely to fall. Accordingly, the thickness of the recording layer 4 should preferably be set in a range of 4nm to 50nm, inclusive, with a range of 5nm to 30nm, inclusive being even more preferable. In this case, when the recording layer 4 is too thin, it becomes difficult for the crystal phase to grow, so that crystallization becomes difficult. On the other hand, if the recording layer 4 is too thick, the heat capacity of the recording layer becomes large, so that the recording of information becomes difficult and the reproduction signal output also falls.

The translucent substrate 2 is formed of a resin plate or a glass plate of around the same thickness as the support substrate 7 and can transmit the laser light L. It should be noted that to achieve a high recording density by raising the numerical aperture NA, the translucent substrate 2 should preferably be made thin. The thickness of the translucent substrate 2 should also preferably be set in a range of 30μm to 300μm, inclusive. In this case, when the translucent substrate 2 is too thin, dust and the like adhering to the surface of the translucent substrate 2 has a larger effect. Conversely, when the translucent substrate 2 is too thick, it becomes difficult to achieve a high recording density by increasing the numerical aperture NA. To make the translucent substrate 2 thinner, it is possible to form the translucent substrate 2 by sticking a light transmitting resin sheet composed of a translucent resin onto the first dielectric layer 3 using various kinds of adhesive or glue, or by applying a resin in a thin film to form a translucent resin layer (the translucent substrate 2) directly on the first dielectric layer 3.

For the optical recording medium 1, the laser light L used to irradiate the medium 1 when recording information passes through the translucent substrate 2, the first dielectric layer 3, the recording layer 4, and the second dielectric layer 5, is reflected by the heat sink layer 6, and then passes back through the second dielectric layer 5 to reach the recording layer 4. In this case, the unitary dielectric layer 3c and the second dielectric layer 5 respectively absorb part of the laser light L and generate heat, so that compared to the case where the unitary dielectric layer 3c and the second dielectric layer 5 are not provided, the generation of heat by the recording layer 4 can be suppressed. In this case, the unitary dielectric layer 3c (the first dielectric layer 3) is present between the translucent substrate 2 and the recording layer 4, and the second dielectric layer 5 is present between the heat sink layer 6, which favorably dissipates heat, and the recording layer 4 so that the heat generated in the unitary dielectric layer 3c is conducted to the translucent substrate 2 and quickly dissipated and the heat generated in the second dielectric layer 5 is conducted to the heat sink layer 6 and quickly dissipated. For this reason, the generation of heat by the unitary dielectric layer 3c and the second dielectric layer 5 hardly affects the recording layer 4. Accordingly, with the optical recording medium 1, it is possible to reduce jitter and to also increase the reproduction durability. With the optical recording medium 1, the heat generated by the second dielectric layer 5 is conducted to the heat sink layer 6 and quickly dissipated, so that when the recording layer 4 is irradiated with the laser light L, the region that is heated to a relatively high temperature is limited to the beam spot and only the narrow immediate periphery of the beam spot. Accordingly, the occurrence of cross-erasing can be avoided with the optical recording medium 1.

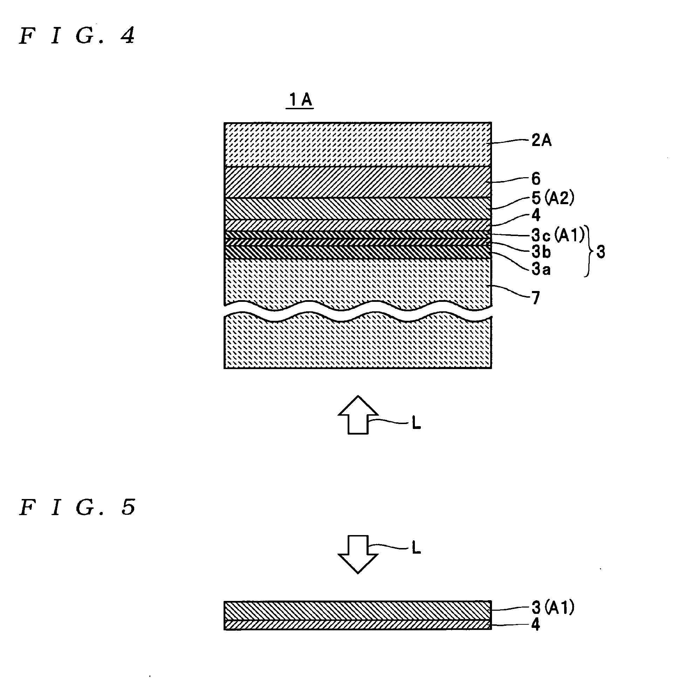

Next, the optical recording medium 1A shown in FIG. 4 will be described. This optical recording medium 1A includes a first dielectric layer 3, a recording layer 4, a second dielectric layer 5, a heat sink layer 6, and a protective layer 2A formed in that order on a support substrate 7, with the recording and reproduction of information being carried out by irradiation with laser light L from the support substrate 7 side. In this case, the support substrate 7 may be formed in the same way as the optical recording medium 1 described above, though the support substrate 7 needs to be formed of a translucent material that can transmit the laser light L. In addition, the protective layer 2A is provided to improve the scratch resistance and corrosion resistance. The protective layer should preferably be formed from a variety of organic substances, and in particular it is preferable to use a substance produced by curing a radiation curing compound or a composite of the same using radiation such as microwaves or UV rays. The protective layer 2A normally has a thickness in a range of 0.1μm to 100μm, inclusive, and is formed by a conventional method such as spin coating, gravure coating, spray coating, and dipping. It should be noted that the other layers that are the same as the corresponding component parts of the optical recording medium 1 have been given the same reference numerals and duplicated description thereof has been omitted.

The laser light L used to irradiate the optical recording medium 1A during the recording of information passes through the support substrate 7, the first dielectric layer 3, the recording layer 4, and the second dielectric layer 5, is reflected by the heat sink layer 6, and then passes back through the second dielectric layer 5 to reach the recording layer 4. In this case, the unitary dielectric layer 3c and the second dielectric layer 5 respectively absorb part of the laser light L and generate heat, so that in the same way as the optical recording medium 1 described above, compared to the case where the unitary dielectric layer 3c (the first dielectric layer 3) and the second dielectric layer 5 are not provided, the amount of heat generated by the recording layer 4 can be suppressed. In this case, the first dielectric layer 3 is present between the support substrate 7 and the recording layer 4 and the second dielectric layer 5 is present between the heat sink layer 6, which favorably dissipates heat, and the recording layer 4, so that the heat generated in the unitary dielectric layer 3c is conducted to the support substrate 7 and quickly dissipated and the heat generated in the second dielectric layer 5 is conducted to the heat sink layer 6 and quickly dissipated to the protective layer 2A. For this reason, the heat generated by the unitary dielectric layer 3c and the second dielectric layer 5 hardly affects the recording layer 4. Accordingly, with the optical recording medium 1A, it is possible to reduce jitter and to also increase the reproduction durability. In addition, with the optical recording medium 1A, the heat generated by the second dielectric layer 5 is conducted to the heat sink layer 6 and quickly dissipated, so that when the recording layer 4 is irradiated with the laser light L, the region that is heated to a relatively high temperature is limited to the beam spot and only the narrow immediate periphery of the beam spot. Accordingly, the occurrence of cross-erasing can also be avoided with the optical recording medium 1A.

It should be noted that although an example where the second dielectric layer 5 (the second absorbing layer A2) is formed on one surface of the recording layer 4 and the unitary dielectric layer 3c (the first absorbing layer A1) is formed on the other surface has been described, as shown in FIG. 5, it is possible to form the first dielectric layer 3 (the first absorbing layer A1) as the second absorbing layer for the present invention on only one surface of the recording layer 4. The present inventors have also confirmed that with the stated multilayer structure (a structure with no second dielectric layer 5), reproduction durability can be improved and the occurrence of cross-erasing can be reduced. However, in an optical recording medium in which only the first dielectric layer 3 is provided on the nearside of the recording layer 4 in the incident direction, compared to the optical recording media 1 and 1A in which the recording layer 4, the second dielectric layer 5, and the heat sink layer 6 are formed in that order from the incident direction of the laser light L as in the optical recording medium according to the present invention, there is no large improvement in the reproduction durability and also a slight increase in the occurrence of cross-erasing. Accordingly, it is preferable to form the first absorbing layer for the present invention on the deeper side of the recording layer 4 with respect to the incident direction.

Embodiments

Embodiments of an optical recording medium according to the present invention will now be described in more detail with reference to the drawings.

First Embodiment

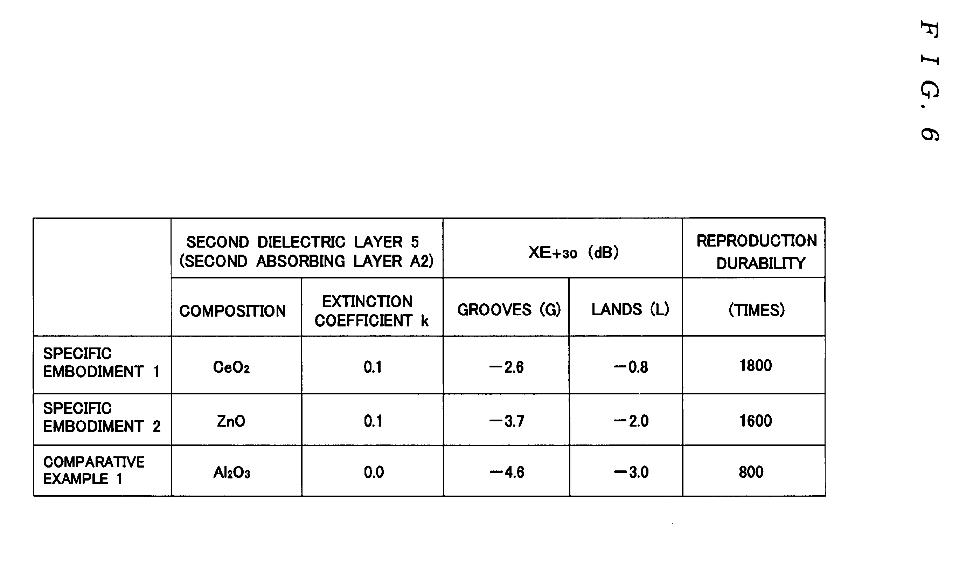

Optical recording media according to specific embodiments 1 and 2 and a comparative example 1 shown in FIG. 6 were fabricated as described below and the occurrence of cross-erasing and reproduction durability were evaluated for such media. It should be noted that the respective optical recording media have the same construction as the optical recording medium 1 shown in FIG. 3.

Fabrication Method

A polycarbonate disc with a diameter of 120mm and a thickness of 1.2mm in which grooves are formed during injection molding is used as the support substrate 7. In this case, the depth of the grooves is $\lambda$/6 (where the wavelength $\lambda$=405mm). The recording track pitch for a land/groove recording method is set at 0.3$\mu$m. The heat sink layer 6 is formed with a thickness of 100nm by sputtering in an Ar atmosphere. Here, AgPdCu (where Ag:Pd:Cu=98:1:1) is used as the target.

The second dielectric layer 5 is formed with a thickness of 12nm by sputtering. The composition of the second dielectric layer 5 and the extinction coefficient k are shown in FIG. 6. A second dielectric layer 5 where k=0.1 (the specific embodiments 1 and 2) functions as the second absorbing layer A2 (the first absorbing layer for the present invention) . It should be noted that the complex refractive indices of the compositions shown in FIG. 6 are $CeO_2$:2.7+0.1i, $ZnO$:2.3+0.1i, and $Al_2O_3$: 1.76+0i. As described above, the complex refractive indices of the respective absorbing layers were measured using a 45° absolute reflectivity measurement accessory (RTA-2000 type) for a spectrophotometer (MPS-2000) made by Shimadzu Corporation.

The recording layer 4 is formed with a thickness of 12nm by sputtering with an alloy target in an Ar atmosphere. The composition (atomic ratio) of the recording layer is given according to Equation (1) above where x=0.796, y=0.07, M=In,Ge, and In:Ge=1:6.

The first dielectric layer 3 is formed with a thickness of 50nm by sputtering with a ZnS (80mol%)-$SiO_2$ (20mol%) target in an Ar atmosphere. The translucent substrate 2 is formed by spin coating the surface of the first dielectric layer 3 with a UV curing resin and hardening the resin.

Evaluation

After initializing (crystallizing) the recording layer 4 of the optical recording media according to the specific embodiments 1 and 2 and the comparative example 1 using a bulk eraser, the optical recording media were placed in an optical recording medium evaluation apparatus and cross-erasing was measured using the procedure described below with the following conditions

    Laser Wavelength $\lambda$:405nm,
    Numerical Aperture NA:0.85,
    Recording Linear Velocity V:6.5m/s,
    Recording Signal:(1-7)RLL (Shortest Mark Length =0.173$\mu$m)

In the above conditions, the value $\lambda$/NA is set at 476nm.

First, the measured track was overwritten ten times with an 8T signal, and the carrier output was set as C1. Next, both adjacent tracks for the measured track were overwritten respectively one hundred times with a 7T signal. After this, the carrier output for the 8T signal originally recorded on the measured track was measured again and set as C2. The value C2 - C1 is the cross-erasing. It should be noted that the recording power and erasing power used when overwriting the measured track is an optimal value (a value that minimizes jitter) for the specific embodiments 1 and 2 and the comparative example 1. On the other hand, values 30% in excess of the optimal values for the specific embodiments 1 and 2 and the comparative example 1 were used as the recording power and erasing power when overwriting both adjacent tracks for the measured track. The cross-erasing values ($XE_{+30}$) for these measurement conditions are shown in FIG. 6. With the above measurement conditions, cross-erasing is larger than when the recording power and the erasing power are set at the optimal values. It should be noted that FIG. 6 shows the cross-erasing when grooves (G) are set as the measured tracks and the cross-erasing when lands (L) are set as the measured tracks.

Next, the reproduction durability was measured for the specific embodiments 1 and 2 and the comparative example 1. When evaluating the reproduction durability, first a mixed signal was recorded at the optimal recording power on the measured track (grooves) with the same conditions as the measurement of cross-erasing, reproduction was carried out repeatedly with a power of 0.5mW, and the maximum number of reproduction repetitions for which jitter does not worsen was investigated. The results are shown in FIG. 6.

As shown in FIG. 6, for the specific embodiments 1 and 2 where the extinction coefficient k of the second dielectric layer 5 (the second absorbing layer A2) is set at 0.1, there is little cross-erasing and the reproduction durability is also favorable. On the other hand, for the comparative example 1 where the extinction coefficient k is zero, there is much cross-erasing and a large decrease in the reproduction durability. Accordingly, by setting the extinction coefficient k of the first absorbing layer for the present invention (in this case, the second dielectric layer 5) at 0.06 or above (in this case, 0.1), it is possible to manufacture an optical recording medium with little jitter and favorable reproduction durability.

Second Embodiment

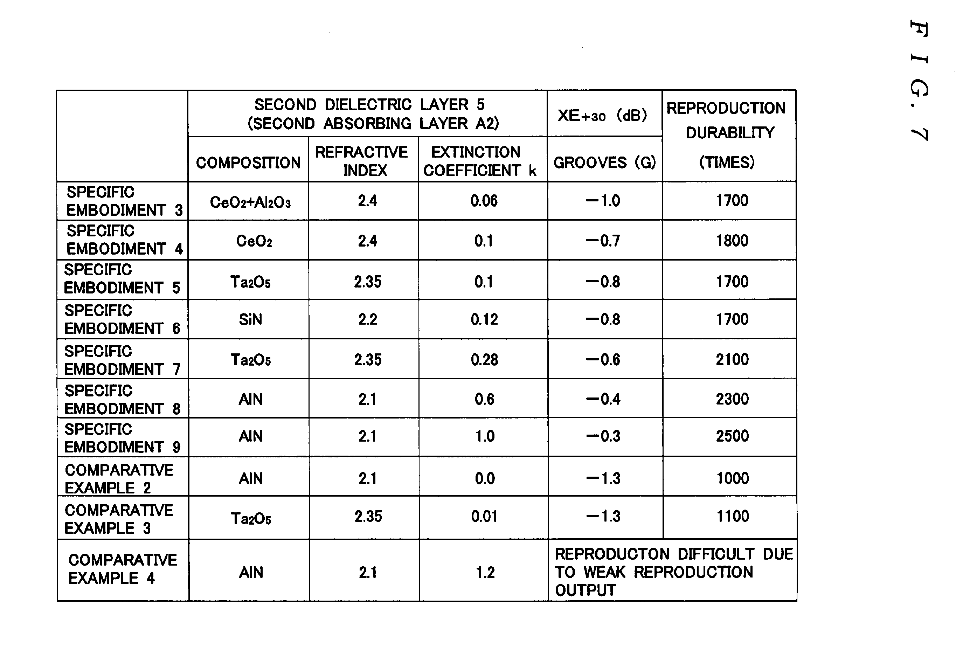

Optical recording media according to specific embodiments 3 to 9 and comparative examples 2 to 4 shown in FIG. 7 were fabricated in the same way as the first embodiment described above, and the occurrence of cross-erasing and the reproduction durability of these media were evaluated in the same way as the first embodiment. It should be noted that in this second embodiment, a grooved recording substrate (with a track pitch of 0.32μm and a groove depth of 22nm) was used as the support substrate 7. Also, the AlN of the second dielectric layer 5 in the specific embodiments 8 and 9 and the comparative examples 2 and 4 is formed by reactive sputtering of Ar and $N_2$, and by varying the proportions of the Ar and $N_2$, optical recording media with different extinction coefficients k were manufactured. Here, the recording characteristics of an optical recording medium are normally affected when the cross-erasing exceeds -1.0dB.

As shown in FIG. 7, for the specific embodiments 3 to 9 where the extinction coefficient k of the second dielectric layer 5 (the second absorbing layer A2) is set in a range of 0.06 to 1.0 inclusive, there is little cross-erasing and the reproduction durability is also favorable. On the other hand, with the comparative example 2 with an extinction coefficient k of zero and the comparative example 3 with an extinction coefficient k of 0.01, there is much cross-erasing and a large decrease in reproduction durability. Also, with the comparative example 4 with an extinction coefficient k of 1.2, the reproduction output is small, so that reproduction is problematic and in turn it is difficult to even evaluate the occurrence of cross-erasing and the reproduction durability. Accordingly, by setting the extinction coefficient k of the first absorbing layer for the present invention (in this case, the second dielectric layer 5) in a range of 0.06 to 1.0, inclusive, it is possible to manufacture an optical recording medium with little jitter and favorable reproduction durability.

Third Embodiment

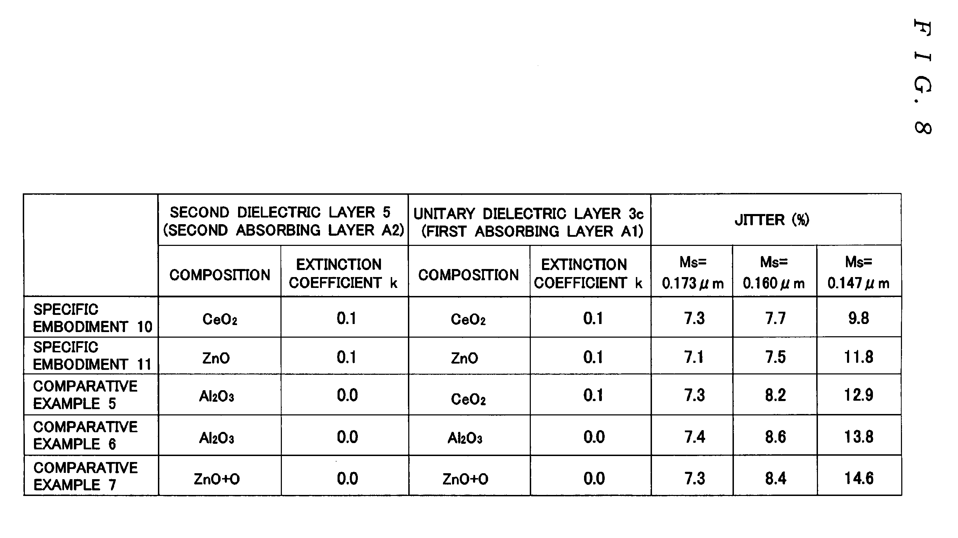

Optical recording media according to specific embodiments 10 and 11 and comparative examples 5 to 7 shown in FIG. 8 were fabricated as described below, and the occurrence of cross-erasing was evaluated for such media. It should be noted that these optical recording media were fabricated with the same construction as the optical recording medium 1 shown in FIG. 3.

Fabrication Method

The support substrate 7, the heat sink layer 6, the recording layer 4, and the translucent substrate 2 were formed in the same way as in the first embodiment. The second dielectric layer 5 (the second absorbing layerA2) was formed with a thickness of 12nm by sputtering. The composition and extinction coefficient k of the second dielectric layer 5 are shown in FIG. 8. The second dielectric layer 5 (in the specific embodiments 10 and 11) whose extinction coefficient k is 0.1 functions as the second absorbing layer A2 (the first absorbing layer for the present invention). It should be noted that a second dielectric layer 5 made of ZnO (in the specific embodiment 11) is formed by sputtering a ZnO target in an Ar gas atmosphere. Also, the second dielectric layer 5 made of ZnO+O (in the comparative example 7) is formed by reactive sputtering of a ZnO target in an Ar gas atmosphere including oxygen gas. Here, the complex refractive index of the ZnO+O is set as ZnO+O:2.2 +0i.

The unitary dielectric layer 3c (the first absorbing layer A1) out of the first dielectric layer 3 was formed with a thickness of 10nm. The composition and extinction coefficient k of this unitary dielectric layer 3c are shown in FIG. 8. It should be noted that in the comparative examples 6 and 7, a dielectric layer with an extinction coefficient k of zero was formed in place of the unitary dielectric layer 3c. The unitary dielectric layer 3b out of the first dielectric layer 3 has a thickness of 25nm and is composed of ZnS (80mol%)-$SiO_2$ (20mol%). The unitary dielectric layer 3a out of the first dielectric layer 3 has a thickness of 60nm and is composed of $Al_2O_3$.

Evaluation

After initializing (crystallizing) the recording layer 4 of the optical recording media according to the specific embodiments 10 and 11 and the comparative examples 5 to 7 using a bulk eraser, the optical recording media were placed in an optical recording medium evaluation apparatus and jitter was measured with the following conditions

Laser Wavelength λ:405nm,
Numerical Aperture NA:0.85,
Recording Linear Velocity V:6.5m/s, and
Recording Signal:(1-7)RLL.

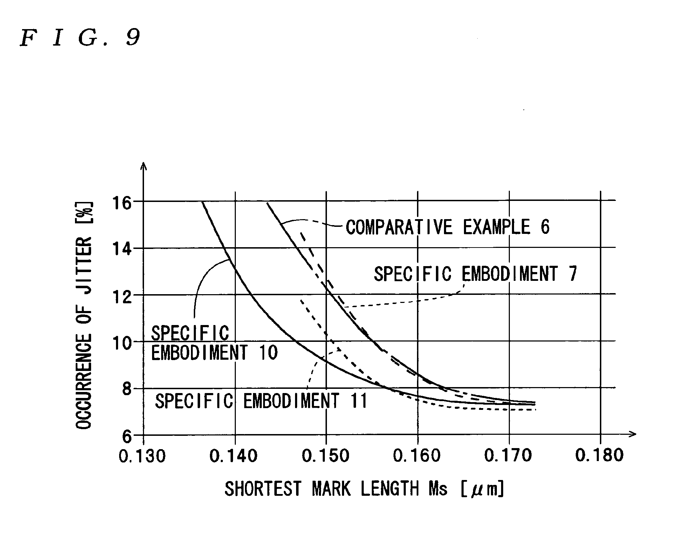

It should be noted that during measurement, the clock frequency was controlled so that the values given in FIG. 8 were achieved for the shortest mark length Ms. The jitter referred to here is so-called "clock jitter". A reproduction signal is measured by a time interval analyzer, the "fluctuation ($\sigma$) in the signal" is found, and jitter is the value calculated based on $\sigma$/Tw (%) using a detection window width Tw. The results are shown in FIG. 8. The results for some of the samples are also shown in FIG. 9. In this case, when jitter is 12% or below, the errors are within tolerance and the reproduction of recording information is possible. Also, to sufficiently maintain various margins, jitter should preferably be 10% or below.

As shown in FIGS. 8 and 9, if the shortest mark length Ms is 0.160$\mu$m or above, the jitter is below 10% for the specific embodiments 10 and 11 and the comparative examples 5 to 7. On the other hand, when the shortest mark Ms is set at 0.147$\mu$m, in the specific embodiments 10 and 11 where the extinction coefficient k of the unitary dielectric layer 3c (the first absorbing layer A1) is set at 0.1, jitter is favorable at below 12%, while for the comparative examples 6 and 7 where the extinction coefficient k of the second dielectric layer 5 (the second absorbing layer A2) is set at zero, jitter exceeds 13%. Accordingly, by setting the extinction coefficient k of the second absorbing layer for the present invention (in this case, the unitary dielectric layer 3c) at 0.06 or above, it is possible to manufacture an optical recording medium with little jitter. In this case, even if the extinction coefficient k of the unitary dielectric layer 3c is 0.1, if the extinction coefficient k of the second dielectric layer 5 is set at zero (as in the comparative example 5), the jitter is 12.9% when the shortest mark length Ms is 0.147$\mu$m. Accordingly, by setting the respective extinction coefficients k of the first and second absorbing layers for the present invention at 0.06 or above, it is possible to manufacture an optical recording medium with less jitter. It should be noted that although the effect of the present invention is realized in the specific embodiment 11 provided with absorbing layers made of ZnO, the effect of the invention is not realized with the comparative example 7 where oxygen is excessively added to the ZnO and the extinction coefficient k falls. From this, it is clear that the effect of the present invention does not depend on the composite elements of the absorbing layers and instead depends on the extinction coefficient k.

Fourth Embodiment

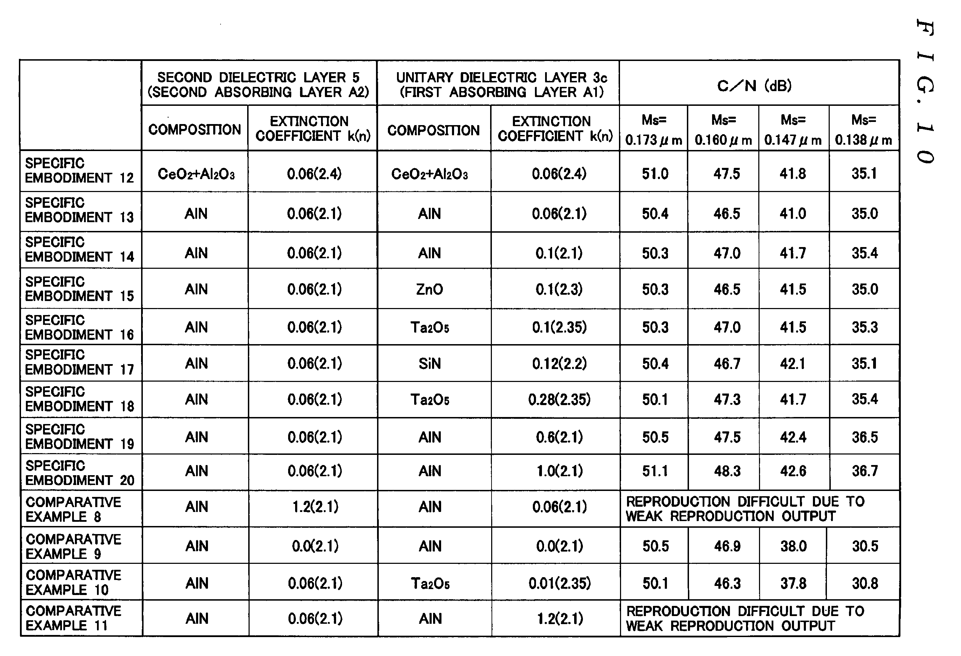

Optical recording media according to specific embodiments 12 to 20 and comparative examples 8 to 11 shown in FIG. 10 were fabricated in the same way as the third embodiment described above, and the C/N ratio was measured for these media. It should be noted that in this fourth embodiment, a grooved recording substrate (withatrackpitch of 0.32$\mu$m and a groove depth of 22nm) was used as the support substrate 7. The thickness of the unitary dielectric layer 3c was set at 30nm. In this case, if the C/N ratio is 35dB or above, it will normally be possible to reproduce the recorded information (i.e., to read the recording marks) with current signal processing technology, which means the media can be used as an actual optical recording media.

As shown in FIG. 10, with the specific embodiments 12 to 20 where the extinction coefficient k is in a range of 0.06 to 1.0, inclusive, for both the second dielectric layer 5 and the unitary dielectric layer 3c, the C/N ratio is a high value of 35dB or above for the respective shortest mark lengths Ms, so that the recorded information can be properly reproduced. On the other hand, with the comparative examples 8 and 11 where the extinction coefficient k of one of the second dielectric layer 5 and the unitary dielectric layer 3c is 1.2, the reproduction output is low and reproduction is difficult, resulting in difficulty even in measuring the C/N ratio. Also, in the comparative example 9 where the extinction coefficient k of both the second dielectric layer 5 and the unitary dielectric layer 3c is zero, although the C/N ratio is 35dB or above when the shortest mark length Ms is 0.147$\mu$m or above, the C/N ratio falls to 30.5dB when the shortest mark length Ms is 0.138$\mu$m, so that proper reproduction of the recorded information becomes difficult. In addition, with the comparative example 10 where the extinction coefficient k of the second dielectric layer 5 is 0.06 and the extinction coefficient k of the unitary dielectric layer 3c is 0.01, although the C/N ratio is 35dB or above when the shortest mark length Ms is 0.147$\mu$m or above, the C/N ratio falls to 30. 8dB when the shortest mark length Ms is 0.138$\mu$m, so that in the same way as the comparative example 9, proper reproduction of the recorded information becomes difficult. Accordingly, by setting the respective extinction coefficients k of the first and the second absorbing layers for the present invention in a range of 0.06 to 1.0, inclusive, it is possible to manufacture an optical recording medium (that can be properly reproduced) with a high C/N ratio for recording at high density.

Fifth Embodiment

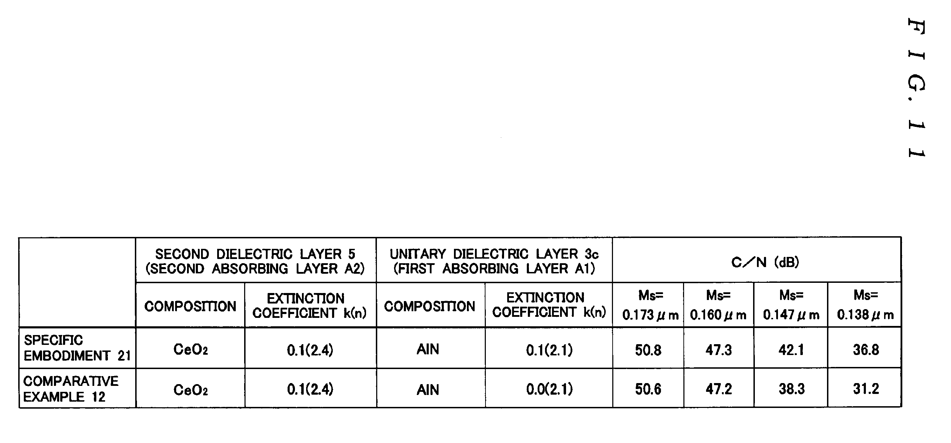

Optical recording media according to a specific embodiment 21 and a comparative example 12 shown in FIG. 11 were fabricated in the same way as the fourth embodiment described above, and the C/N ratio for these media was measured. It should be noted that the AlN of the unitary dielectric layer 3c of this fifth embodiment was formed by reactive sputtering inAr and $N_2$, and optical recording media with different extinction coefficients k were fabricated by varying the proportions of Ar and $N_2$.

As shown in FIG. 11, for the specific embodiment 21 where the extinction coefficients k of both the second dielectric layer 5 and the unitary dielectric layer 3c are 0.1, the C/N ratio for all of the shortest mark lengths Ms is 35db or above, so that the recorded information can be properly reproduced. On the other hand, for the comparative example 12 where the extinction coefficient k of the unitary dielectric layer 3c is zero, when the shortest mark length Ms is 0.138μm, the C/N ratio falls to 31.2dB, so that it is difficult to reproduce the recorded information properly. That is, even when the same material is used, so long as the extinction coefficient k of such material does not satisfy the condition of the present invention, the effect of the present invention cannot be obtained. Accordingly, by setting the respective extinction coefficients k of the first and the second absorbing layers for the present invention in a range of 0.06 to 1. 0, inclusive, it is possible to manufacture an optical recording medium (that can be properly reproduced) with a high C/N ratio.

Sixth Embodiment

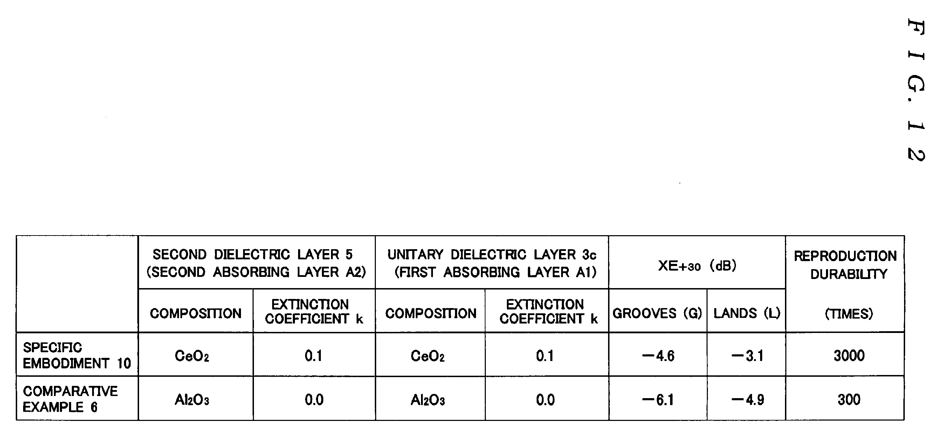

The occurrence of cross-erasing and the reproduction durability were evaluated in the same way as in the first embodiment for optical recording media fabricated in the third embodiment described above (the specific embodiment 10 and the comparative example 6). The results are shown in FIG. 12.

As shown in FIG. 12, for the specific embodiment 10 where the respective extinction coefficients k of the second dielectric layer 5 (the second absorbing layer A2) and the unitary dielectric layer 3c (the first absorbing layer A1) are set at 0.1, cross-erasing is reduced and the reproduction durability is favorable. On the other hand, for the comparative example 6 where the respective extinction coefficients k are zero, there is much cross-erasing and a large fall in the reproduction durability. Accordingly, by setting the respective extinction coefficients k of the first absorbing layer (in this case, the second dielectric layer 5) and the unitary dielectric layer 3c (the first absorbing layer A1) for the present invention at 0.06 or above, it is possible to manufacture an optical recording medium with little jitter and favorable reproduction durability.

INDUSTRIAL APPLICABILITY

As described above, according to this optical recording medium, by constructing the first absorbing layer so that the extinction coefficient k is in a range of 0.06 to 1.0, inclusive, for the wavelength of the light used for recording and reproduction, it is possible to sufficiently improve the reproduction durability and to sufficiently reduce cross-erasing, even when recording at high density. By doing so, it is possible to realize an optical recording medium that can be recorded at high density, has high reproduction durability, and is not susceptible to cross-erasing.

**Claims**

1. An optical recording medium comprising a recording layer, a first absorbing layer and a heat sink layer formed in order from an incident side for light used for recording or light used for reproduction,

   the first absorbing layer having an extinction coefficient k for a wavelength of the light used for recording or the light used for reproduction that satisfies $0.06 \leqq k \leqq 1.0$.

2. An optical recording medium according to Claim 1, further comprising a second absorbing layer formed on an incident side-surface of the recording layer for the light,

   the second absorbing layer having an extinction coefficient k for the wavelength of the light used for recording or the light used for reproduction that satisfies $0.06 \leqq k \leqq 1.0$.

3. An optical recording medium according to Claim 1, wherein the optical recording medium is capable of being recorded or reproduced when a relationship between the wavelength $\lambda$ of the light used for recording or for reproduction and a numerical aperture NA of an irradiation optical system for the light used for recording or for reproduction satisfies a condition $\lambda/NA \leqq 680nm$.

4. An optical recording medium according to Claim 2, wherein the optical recording medium is capable of being recorded or reproduced when a relationship between the wavelength $\lambda$ of the light used for recording or for reproduction and a numerical aperture NA of an irradiation optical system for the light used for recording or for reproduction satisfies a condition $\lambda/NA \leqq 680nm$.

5. An optical recording medium according to Claim 1, wherein a recording track pitch is formed at 0.35μm or below.

6. An optical recording medium according to Claim 2, wherein a recording track pitch is formed at 0.35μm or below.

7. An optical recording medium according to Claim 3, wherein a recording track pitch is formed at 0.35μm or below.

8. An optical recording medium according to Claim 1, wherein information can be recorded with a shortest mark length set at 0.17μm or below.

9. An optical recording medium according to Claim 2, wherein information can be recorded with a shortest mark length set at 0.17μm or below.

10. An optical recording medium according to Claim 3, wherein information can be recorded with a shortest mark length set at 0.17µm or below.

11. An optical recording medium according to Claim 5, wherein information can be recorded with a shortest mark length set at 0.17µm or below.

*F I G . 1*

*F I G . 2*

*F I G . 3*

F I G . 4

F I G . 5

# F I G . 6

| | SECOND DIELECTRIC LAYER 5 (SECOND ABSORBING LAYER A2) | | $XE_{+30}$ (dB) | | REPRODUCTION DURABILITY |
|---|---|---|---|---|---|
| | COMPOSITION | EXTINCTION COEFFICIENT k | GROOVES (G) | LANDS (L) | (TIMES) |
| SPECIFIC EMBODIMENT 1 | $CeO_2$ | 0.1 | −2.6 | −0.8 | 1800 |
| SPECIFIC EMBODIMENT 2 | ZnO | 0.1 | −3.7 | −2.0 | 1600 |
| COMPARATIVE EXAMPLE 1 | $Al_2O_3$ | 0.0 | −4.6 | −3.0 | 800 |

FIG. 7

| | SECOND DIELECTRIC LAYER 5 (SECOND ABSORBING LAYER A2) | | | $XE_{+30}$ (dB) | REPRODUCTION DURABILITY |
| --- | --- | --- | --- | --- | --- |
| | COMPOSITION | REFRACTIVE INDEX | EXTINCTION COEFFICIENT k | GROOVES (G) | (TIMES) |
| SPECIFIC EMBODIMENT 3 | $CeO_2+Al_2O_3$ | 2.4 | 0.06 | −1.0 | 1700 |
| SPECIFIC EMBODIMENT 4 | $CeO_2$ | 2.4 | 0.1 | −0.7 | 1800 |
| SPECIFIC EMBODIMENT 5 | $Ta_2O_5$ | 2.35 | 0.1 | −0.8 | 1700 |
| SPECIFIC EMBODIMENT 6 | SiN | 2.2 | 0.12 | −0.8 | 1700 |
| SPECIFIC EMBODIMENT 7 | $Ta_2O_5$ | 2.35 | 0.28 | −0.6 | 2100 |
| SPECIFIC EMBODIMENT 8 | AlN | 2.1 | 0.6 | −0.4 | 2300 |
| SPECIFIC EMBODIMENT 9 | AlN | 2.1 | 1.0 | −0.3 | 2500 |
| COMPARATIVE EXAMPLE 2 | AlN | 2.1 | 0.0 | −1.3 | 1000 |
| COMPARATIVE EXAMPLE 3 | $Ta_2O_5$ | 2.35 | 0.01 | −1.3 | 1100 |
| COMPARATIVE EXAMPLE 4 | AlN | 2.1 | 1.2 | REPRODUCTON DIFFICULT DUE TO WEAK REPRODUCTION OUTPUT | |

EP 1 577 888 A2

EP 1 577 888 A2

| | SECOND DIELECTRIC LAYER 5 (SECOND ABSORBING LAYER A2) | | UNITARY DIELECTRIC LAYER 3c (FIRST ABSORBING LAYER A1) | | JITTER (%) | | |
|---|---|---|---|---|---|---|---|
| | COMPOSITION | EXTINCTION COEFFICIENT k | COMPOSITION | EXTINCTION COEFFICIENT k | Ms= 0.173 $\mu$m | Ms= 0.160 $\mu$m | Ms= 0.147 $\mu$m |
| SPECIFIC EMBODIMENT 10 | $CeO_2$ | 0.1 | $CeO_2$ | 0.1 | 7.3 | 7.7 | 9.8 |
| SPECIFIC EMBODIMENT 11 | ZnO | 0.1 | ZnO | 0.1 | 7.1 | 7.5 | 11.8 |
| COMPARATIVE EXAMPLE 5 | $Al_2O_3$ | 0.0 | $CeO_2$ | 0.1 | 7.3 | 8.2 | 12.9 |
| COMPARATIVE EXAMPLE 6 | $Al_2O_3$ | 0.0 | $Al_2O_3$ | 0.0 | 7.4 | 8.6 | 13.8 |
| COMPARATIVE EXAMPLE 7 | ZnO+O | 0.0 | ZnO+O | 0.0 | 7.3 | 8.4 | 14.6 |

FIG. 9

F I G. 1 0

| | SECOND DIELECTRIC LAYER 5 (SECOND ABSORBING LAYER A2) | | UNITARY DIELECTRIC LAYER 3c (FIRST ABSORBING LAYER A1) | | C/N (dB) | | | |
|---|---|---|---|---|---|---|---|---|
| | COMPOSITION | EXTINCTION COEFFICIENT k(n) | COMPOSITION | EXTINCTION COEFFICIENT k(n) | Ms= 0.173 μm | Ms= 0.160 μm | Ms= 0.147 μm | Ms= 0.138 μm |
| SPECIFIC EMBODIMENT 12 | $CeO_2+Al_2O_3$ | 0.06(2.4) | $CeO_2+Al_2O_3$ | 0.06(2.4) | 51.0 | 47.5 | 41.8 | 35.1 |
| SPECIFIC EMBODIMENT 13 | AlN | 0.06(2.1) | AlN | 0.06(2.1) | 50.4 | 46.5 | 41.0 | 35.0 |
| SPECIFIC EMBODIMENT 14 | AlN | 0.06(2.1) | AlN | 0.1(2.1) | 50.3 | 47.0 | 41.7 | 35.4 |
| SPECIFIC EMBODIMENT 15 | AlN | 0.06(2.1) | ZnO | 0.1(2.3) | 50.3 | 46.5 | 41.5 | 35.0 |
| SPECIFIC EMBODIMENT 16 | AlN | 0.06(2.1) | $Ta_2O_5$ | 0.1(2.35) | 50.3 | 47.0 | 41.5 | 35.3 |
| SPECIFIC EMBODIMENT 17 | AlN | 0.06(2.1) | SiN | 0.12(2.2) | 50.4 | 46.7 | 42.1 | 35.1 |
| SPECIFIC EMBODIMENT 18 | AlN | 0.06(2.1) | $Ta_2O_5$ | 0.28(2.35) | 50.1 | 47.3 | 41.7 | 35.4 |
| SPECIFIC EMBODIMENT 19 | AlN | 0.06(2.1) | AlN | 0.6(2.1) | 50.5 | 47.5 | 42.4 | 36.5 |
| SPECIFIC EMBODIMENT 20 | AlN | 0.06(2.1) | AlN | 1.0(2.1) | 51.1 | 48.3 | 42.6 | 36.7 |
| COMPARATIVE EXAMPLE 8 | AlN | 1.2(2.1) | AlN | 0.06(2.1) | REPRODUCTION DIFFICULT DUE TO WEAK REPRODUCTION OUTPUT | | | |
| COMPARATIVE EXAMPLE 9 | AlN | 0.0(2.1) | AlN | 0.0(2.1) | 50.5 | 46.9 | 38.0 | 30.5 |
| COMPARATIVE EXAMPLE 10 | AlN | 0.06(2.1) | $Ta_2O_5$ | 0.01(2.35) | 50.1 | 46.3 | 37.8 | 30.8 |
| COMPARATIVE EXAMPLE 11 | AlN | 0.06(2.1) | AlN | 1.2(2.1) | REPRODUCTION DIFFICULT DUE TO WEAK REPRODUCTION OUTPUT | | | |

# F I G . 1 1

| | SECOND DIELECTRIC LAYER 5 (SECOND ABSORBING LAYER A2) | | UNITARY DIELECTRIC LAYER 3c (FIRST ABSORBING LAYER A1) | | C/N (dB) | | | |
|---|---|---|---|---|---|---|---|---|
| | COMPOSITION | EXTINCTION COEFFICIENT k(n) | COMPOSITION | EXTINCTION COEFFICIENT k(n) | Ms= 0.173 μm | Ms= 0.160 μm | Ms= 0.147 μm | Ms= 0.138 μm |
| SPECIFIC EMBODIMENT 21 | $CeO_2$ | 0.1(2.4) | AlN | 0.1(2.1) | 50.8 | 47.3 | 42.1 | 36.8 |
| COMPARATIVE EXAMPLE 12 | $CeO_2$ | 0.1(2.4) | AlN | 0.0(2.1) | 50.6 | 47.2 | 38.3 | 31.2 |

22

# F I G . 1 2

| | SECOND DIELECTRIC LAYER 5 (SECOND ABSORBING LAYER A2) | | UNITARY DIELECTRIC LAYER 3c (FIRST ABSORBING LAYER A1) | | XE+30 (dB) | | REPRODUCTION DURABILITY |
|---|---|---|---|---|---|---|---|
| | COMPOSITION | EXTINCTION COEFFICIENT k | COMPOSITION | EXTINCTION COEFFICIENT k | GROOVES (G) | LANDS (L) | (TIMES) |
| SPECIFIC EMBODIMENT 10 | CeO$_2$ | 0.1 | CeO$_2$ | 0.1 | −4.6 | −3.1 | 3000 |
| COMPARATIVE EXAMPLE 6 | Al$_2$O$_3$ | 0.0 | Al$_2$O$_3$ | 0.0 | −6.1 | −4.9 | 300 |

23